# EUROPEAN PATENT SPECIFICATION

(11) **EP 4 349 662 B1**
(45) Date of publication and mention of the grant of the patent: **30.04.2025**
(21) Application number: 22200043.2
(22) Date of filing: 06.10.2022
(51) Int. Cl.: B60R 21/013, B60R 21/015, B60R 21/0134

(54) **METHOD FOR OCCUPANT RESTRAINT CONTROL ON BOARD OF A VEHICLE**
VERFAHREN ZUR INSASSENRÜCKHALTESTEUERUNG AN BORD EINES FAHRZEUGS
PROCÉDÉ DE COMMANDE DE RETENUE D'OCCUPANT À BORD D'UN VÉHICULE

(43) Date of publication of application: 10.04.2024
(73) Proprietor: Veoneer Sweden Safety Systems AB, 10302 Stockholm (SE)
(72) Inventor: DEVAVRY, Arnaud, 95800 Cergy-Pontoise (FR); VERMEULIN, Francois-Xavier, 95800 Cergy-Pontoise (FR); ROCCHISANI, Claire, 95800 Cergy-Pontoise (FR); LEMERRER, Yann, 95800 Cergy-Pontoise (FR); BEN SAID, Hela, 95800 Cergy-Pontoise (FR); LOISY, Aurore, 95800 Cergy-Pontoise (FR)
(74) Representative: Reichert & Lindner Partnerschaft Patentanwälte

(56) References cited:
- JP-B2- 4 342 052
- US-B1- 6 431 593
- US-B2- 10 293 836

## Description

### FIELD OF THE INVENTION

The invention relates to the automotive sector, more precisely to the control of restraint systems in a vehicle.

### DESCRIPTION OF THE BACKGROUND ART

Automotive safety standards, established by the industry or imposed by law, amongst other issues define requirements intended to avoid or reduce injuries caused to occupants of a vehicle during a crash or near crash. While these standards to a limited extent take into account varying physical constitution of occupants by referring to a number of different defined crash dummy morphologies, it is assumed that the occupant always is in a defined position with respect to vehicle cabin and seat of the occupant, with the torso supported by the backrest of the seat and the head supported by the headrest. Reality is different. Occupants will usually move out of this defined ideal position. The causes for such movements can be divided into two groups: voluntary movements and involuntary movements. Examples of voluntary movements are an occupant, whether driver or passenger, leaning forward to operate buttons on an entertainment system or other device, bending downwards to search for an item dropped, or even resting their legs on the dashboard. Involuntary movements are those resulting from forces acting on the occupants, in particular inertial forces resulting from the motion of the vehicle, like braking or evasive manoeuvres. With the occupant, voluntarily or involuntarily, moved out of the ideal position, i.e., with the occupant in a so-called out-of-position-(OOP) situation, the occupant's interaction with safety systems like an airbag in a subsequent crash may lead to unfavourable results for the occupant.

It is known to trigger pre-crash restraint systems, like an electric safety belt retractor, to bring the occupant into or at least close to, the ideal position upon imminence of a crash. Such an imminent crash can be inferred from acceleration signals captured by inertial sensors on board of the vehicle, maybe combined with signals resulting from operation of the steering wheel and/or the brakes. In such a situation, however, the actual position/movement of the occupant can at best be only roughly estimated from accelerometer and/or yaw rate sensors, or other types of inertial sensors on board of the vehicle.

Document US 6 431 593 discloses a vehicle including a cabin monitoring system configured to capture information on a position and/or movement of an occupant of a cabin of the vehicle; one or more sensors configured to capture information on a state of motion of the vehicle; one or more pre-crash restraint systems for the occupant; one or more in-crash restraint systems for the occupant; a data processing system configured to receive the information captured by the cabin monitoring system, to receive the information captured by the one or more sensors, and configured to perform a correlation of the information captured by the cabin monitoring system with the information captured by the one or more sensors to determine whether the position and / or movement of the occupant is due to a voluntary or involuntary movement of the occupant, and to activate the pre-crash braking system.

### SUMMARY OF THE INVENTION

Evidently, more reliable approaches to restraint control in dependence on occupant position and movement are desirable. It is an object of the invention to provide such an improved approach. Claim 1 relates to a corresponding method and claim 8 to a corresponding vehicle that achieve the above object. The respective dependent claims refer to advantageous embodiments.

The inventive method for occupant restraint control on board of a vehicle comprises the following steps:
Information on a position and / or movement of the occupant relative to a cabin of the vehicle is captured by means of a cabin monitoring system on board of the vehicle. Also, by means of one or more sensors on board of the vehicle, information on a state of motion of the vehicle is captured. The captured information on the position and / or movement of the occupant relative to the cabin is correlated with the information on the state of motion of the vehicle to determine whether the position and / or movement of the occupant is due to a voluntary or involuntary movement of the occupant; this may be done by a data processing system on board of the vehicle. One or more pre-crash restraint systems for the occupant are activated if the correlation of the previous step indicates an involuntary movement of the occupant; this may also be done by the data processing system on board of the vehicle. Correlation of the captured information here means that the information on the position/movement of the occupant and the information on the state of motion of the vehicle are evaluated together to determine whether the position, and in particular movement, of the occupant are consistent with forces acting on the occupant, in particular inertial forces which can be determined from the information on the state of motion of the vehicle. If there is consistency, the movements of the occupant are deemed involuntary. Determining consistency may involve comparing the position/movement of the occupant determined from the cabin monitoring system with predicted position/movement of the occupant derived from the forces derived from the state of motion of the vehicle, which comparison may include thresholds for a match between determined and predicted position/movement and also take into account measurement errors inherent in the cabin monitoring system and the sensors for the state of motion of the vehicle.

Restraint systems in a vehicle are divided into pre-crash restraint systems and in-crash restraint systems. In-crash restraint systems are restraint systems to be triggered if a corresponding control logic on board of the vehicle determines that the vehicle is in a crash situation. Typical in-crash restraint systems are airbags and pyrotechnical safety belt retractors. Pre-crash restraint systems are restraint systems to be activated if a corresponding control logic on board of the vehicle determines that the situation of the vehicle is developing towards a potential crash. In this case, pre-crash restraint systems are activated to bring an occupant of the vehicle into a position more suitable for the potential subsequent triggering of in-crash restraint systems. A typical example of a pre-crash restraint system is an electric safety belt retractor.

By the inventive method, via the cabin monitoring system, reliable information on the position/movement of the occupant is obtained, which information is far more detailed than estimations from sensor data in the prior art. Due to the correlation with information on the state of motion of the vehicle the distinction between voluntary and involuntary movements is possible, which distinction avoids erroneously triggering pre-crash restraint systems in cases where no crash or near crash is imminent, and where there are no hard movements, e.g. due to inertial forces, of the occupant relative to the cabin, either. Such an erroneous triggering would prevent the occupant from standard actions like operating an entertainment system or taking an item out of a storage compartment. Needless to say, such an uncalled-for interference by the pre-crash restraint systems is highly undesirable.

Preferably, the method is applied to all occupants of a vehicle.

Details on the position and/or movement of an occupant obtained from the cabin monitoring system may be taken into account to adapt the activation of in-crash restraint systems or the operation of activated in-crash restraint systems to such details. Put differently, the restraint strategy for in-crash restraint systems on board of the vehicle may be optimised based on the details on the position and/or movement of an occupant obtained from the cabin monitoring system.

In an embodiment of the method, if the correlation indicates a voluntary movement of the occupant, i.e., if no action of restraint systems is necessary, a warning signal is triggered. This warning signal can remind the occupant to assume the ideal position for increased safety. In a further development, the warning signal is only triggered if the movement of the occupant exceeds a predefined threshold. If even slight deviations from the ideal position were to trigger the warning signal, this may firstly lead to a repeated distraction of the driver and thus increase the risk of an accident, and secondly numb an occupant's alertness and response to the signal, so that the signal may also be ignored in cases where a readjustment of the occupant's position in the cabin is to be recommended. The warning signal may for example be a message on HMI (Human Machine Interface), an optical signal such as flashing lights, and/or an acoustic signal, and/or a vibration signal, such as a vibration of the seat or vibrations of the seat belt of the respective occupant.

In an embodiment, the one or more sensors on board of the vehicle to capture information on the state of motion of the vehicle include an inertial sensor. More than one inertial sensor may be used to capture information on the state of motion of the vehicle. For example, one inertial sensor may be used to determine an acceleration of a centre of mass of the vehicle, while a plurality of further inertial sensors, located at various positions within the vehicle, may provide signals used to determine a rotation of the vehicle about its centre of mass.

In an embodiment, the one or more pre-crash restraint systems include an electric safety belt retractor. Triggering the safety belt retractor will pull the respective occupant towards the backrest of the seat and thus closer to the ideal position.

In an embodiment, the cabin monitoring system includes at least one 3D sensor system. Of course, more than one 3D sensor system may be used in the cabin monitoring system. The at least one 3D sensor system may encompass an optical 3D sensor. An optical 3D sensor is any kind of sensor using optical radiation, e.g., visible or infrared light, to obtain three-dimensional data, in this context three-dimensional data which can be analysed to determine position and movement of occupants of the cabin of the vehicle. An example of an optical 3D sensor is one or more time-of-flight sensors which measure a distance to an object by emitting a light signal and measuring the time passing between emission of this signal and detection of light of this signal scattered from the object. Another example of an optical 3D sensor is a projected-light sensor, which operates by projecting a light pattern onto an object, recording the projected light pattern on the object with a camera, and determining the distance to the object by triangulation. A laser may be used as a light source for an optical 3D sensor, without the invention being restricted thereto. A further example of an optical 3D sensor is a 3D imaging sensor, which is a sensor providing three-dimensional image data which can be analysed to determine position and movement of occupants of the cabin of the vehicle; to this end, a 3D imaging sensor may include one or more cameras. Other examples of a 3D sensor system use electromagnetic radiation in other spectral regions, like in the radio wave range, or use different types of signals, like ultrasonic signals, to obtain three-dimensional data which can be analysed to determine position and movement of occupants of the cabin of the vehicle. Combinations of the above are also possible; as one non-limiting example, a 3D sensor system may use both infrared light and ultrasonic signals to obtain the required three-dimensional data.

The vehicle according to the invention is configured to perform the method according to the invention, as described above.

The vehicle includes a cabin monitoring system configured to capture information on a position and/or movement of an occupant of a cabin of the vehicle, preferentially of all occupants of the cabin. The vehicle also includes one or more sensors configured to capture information on a state of motion of the vehicle and one or more pre-crash restraint systems for the occupant as well as one or more in-crash restraint systems for the occupant. According to the invention, the vehicle includes a data processing system configured to receive the information captured by the cabin monitoring system, to receive the information captured by the one or more sensors on a state of motion of the vehicle, and configured to perform a correlation of the information captured by the cabin monitoring system with the information captured by the one or more sensors to determine whether the position and / or movement of the occupant is due to a voluntary or involuntary movement of the occupant, and to activate the one or more pre-crash restraint systems for the occupant if the correlation indicates an involuntary movement of the occupant. More detailed discussion on the correlation has been given above in the context of the method. The data processing system may further be configured to optimise a strategy for the triggering of the in-crash restraint systems.

In an embodiment, the one or more sensors include an inertial sensor. The vehicle may include plural inertial sensors all used for the method according to the invention, as discussed above.

In an embodiment, the cabin monitoring system includes at least one 3D sensor system. The cabin monitoring system of the vehicle may include more than one 3D sensor system. According to an embodiment of the invention the 3D sensor system can be configured as well as an optical 3D sensor.

In an embodiment, the one or more pre-crash restraint systems include an electric safety belt retractor.

In an embodiment, the vehicle includes a warning signal system. The data processing system is configured to activate the warning signal system if the correlation indicates that the movement of the occupant is voluntary. In a refinement, the data processing system is configured to activate the warning signal system only if the movement of the occupant exceeds a predefined threshold. The warning signal from the signal system may for example be optical and/or acoustic and/or a vibration signal.

### BRIEF DESCRIPTION OF THE DRAWINGS

Below, the invention and its advantages will be described with reference to the accompanying figures.

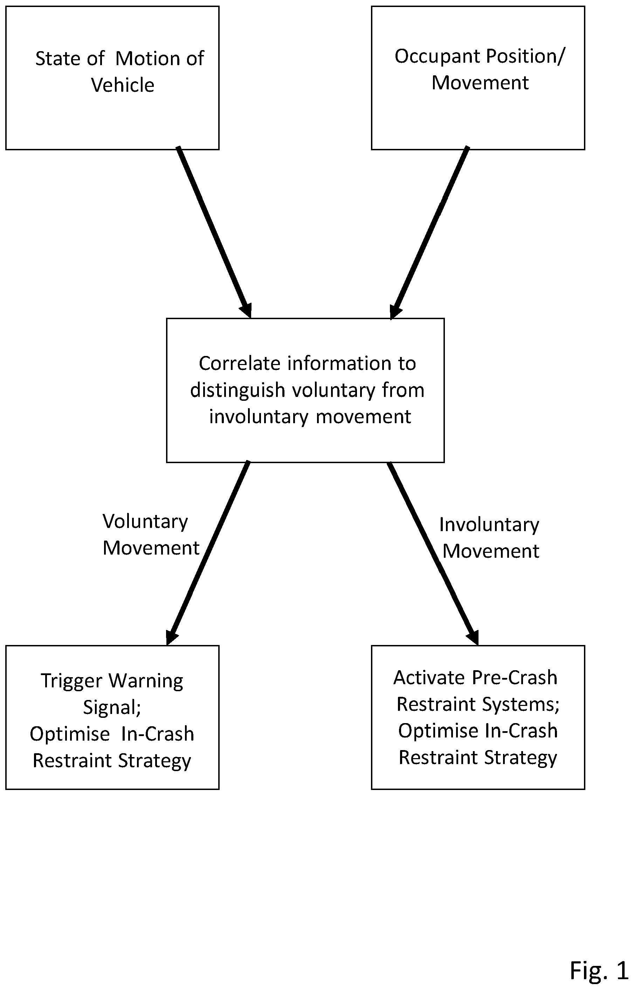

- Figure 1: is a diagram illustrating an embodiment of the inventive method.
- Figure 2: shows a vehicle according to the invention.

The figures are only schematic examples of how the invention may be implemented and therefore are not to be taken as limitations of the invention.

### DETAILED DESCRIPTION

In the ensuing description, numerous specific details are provided to enable maximum understanding of the embodiments that are provided by way of example. The embodiments may be implemented with or without specific details, or else with other methods, components, materials, etc. In other circumstances, well-known structures, materials, or operations are not illustrated or described in detail so that various aspects of the embodiments will not be obscured. Reference in the course of the present description to "an embodiment" or "one embodiment" means that a particular structure, peculiarity, or characteristic described in connection with its implementation is comprised in at least one embodiment. Hence, phrases such as "in an embodiment" or "in one embodiment" that may recur in various points of the present description do not necessarily refer to one and the same embodiment. Furthermore, the particular structures, peculiarities, or characteristics may be combined in any convenient way in one or more embodiments.

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

**Fig**. **1** illustrates an embodiment of the inventive method. Inertial sensors provide information on a state of motion of the vehicle. A cabin monitoring system provides information on the position and/or movement of the occupant or occupants of a cabin of the vehicle. These two types of information are correlated to distinguish voluntary movement of the occupant(s) from involuntary movement of the occupant(s). In case of voluntary movement, a warning signal is triggered. In case of involuntary movement, one or more pre-crash restraint systems for the occupant(s) are activated to reduce or counter the involuntary movement. In either case, the strategy for the triggering of in-crash restraint systems may be optimised, based on the information on the position and/or movement of the occupant or occupants.

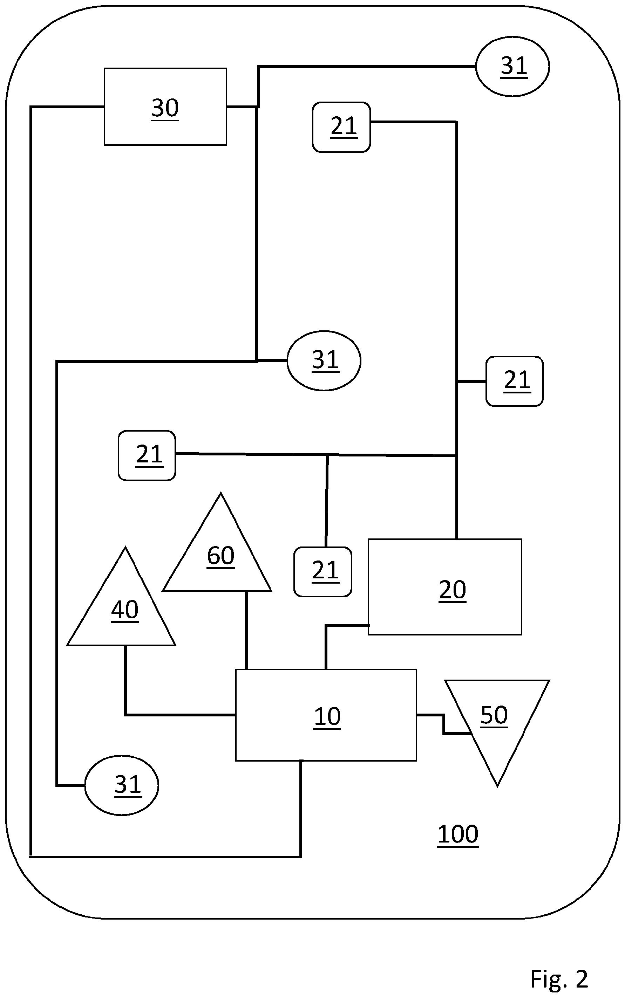

**Fig. 2** shows a vehicle 100 according to the invention. On board of the vehicle 100 there are a data processing system 10, a cabin monitoring system 20 including at least one 3D sensor system 21, an inertial measurement unit 30 connected to a plurality of inertial sensors 31, a pre-crash restraint system 40, a warning signal system 50, and an in-crash restraint system 60. The data processing system 10 is connected to the cabin monitoring system 20, the inertial measurement unit 30, the pre-crash restraint system 40 and the warning signal system 50. This connection is such that the data processing system 10 can receive information from the inertial measurement unit 30 on the state of motion of the vehicle 100 and information from the cabin monitoring system 20 on position and/or movement of one or more occupants of a cabin of the vehicle 100. The connection is further such that the data processing system 10 can activate the pre-crash restraint system 40 and the warning signal system 50. The cabin monitoring system 20 obtains information on position and/or movement of one or more occupants of the cabin of the vehicle 100 by evaluating three-dimensional data captured by the at least one 3D sensor system 21 from an interior of the cabin of the vehicle 100. The inertial measurement unit 30 obtains the information on the state of motion of the vehicle 100 from output of the inertial sensors 31. The data processing system 10 is configured to correlate the information from the cabin monitoring system 20 and from the inertial measurement unit 30 to determine whether a movement of one or more occupants of the cabin of the vehicle 100 is voluntary or involuntary. The data processing system 10 is configured to trigger the pre-crash restraint system 40 in case of involuntary movement, and to trigger the warning signal system 50 in case of voluntary movement. In different embodiments, for example, the inertial sensors 31 may be connected directly to the data processing system 10, which will infer the state of motion of the vehicle 100 from the output of the sensors 31. In the embodiment shown, the data processing system 10 is also connected to the in-crash restraint system 60 and can adapt a strategy for triggering the in-crash restraint system 60. This may be accomplished by providing suitable information to the in-crash restraint system 60, e.g., by setting parameters in the in-crash restraint system 60 which control the triggering of the in-crash restraint system 60. As an alternative, the data processing system 10 may be configured to also trigger the in-crash restraint system 60 and to store an adapted strategy, e.g., in terms of suitable parameters, for triggering the in-crash restraint system 60 within the data processing system 10.

### List of Reference Signs

- 10: data processing system
- 20: cabin monitoring system
- 21: 3D sensor system
- 30: inertial measurement unit
- 31: inertial sensor
- 40: pre-crash restraint system
- 50: signal system
- 60: in-crash restraint system
- 100: vehicle

## Claims

1. Method for occupant restraint control on board of a vehicle (100), the method comprising the steps:
capturing information on a position and / or movement of the occupant relative to a cabin of the vehicle (100) by means of a cabin monitoring system (20) on board of the vehicle (100);
capturing, by means of one or more sensors (31) on board of the vehicle (100), information on a state of motion of the vehicle (100);
correlating the information on the position and/or movement of the occupant relative to the cabin with the information on the state of motion of the vehicle (100) to determine whether the position and / or movement of the occupant is due to a voluntary or involuntary movement of the occupant;
activating one or more pre-crash restraint systems (40) for the occupant if the correlation of the previous step indicates an involuntary movement of the occupant.

2. Method according to claim 1, wherein, if the correlation indicates a voluntary movement of the occupant, a warning signal is triggered.

3. Method according to claim 2, wherein the warning signal is only triggered if the movement of the occupant exceeds a predefined threshold.

4. Method according to one of the previous claims, wherein a strategy for the triggering of one or more in-crash restraint systems (60) is adapted based on the information on the position and/or movement of the occupant.

5. Method according to one of the previous claims, wherein the one or more sensors (31) on board of the vehicle (100) to capture information on the state of motion of the vehicle include an inertial sensor.

6. Method according to one of the previous claims, wherein the one or more pre-crash restraint systems (40) include an electric safety belt retractor.

7. Method according to one of the previous claims, wherein the cabin monitoring system (20) includes at least one 3D sensor system (21).

8. Vehicle (100) including
a cabin monitoring system (20) configured to capture information on a position and/or movement of an occupant of a cabin of the vehicle (100);
one or more sensors (31) configured to capture information on a state of motion of the vehicle (100);
one or more pre-crash restraint systems (40) for the occupant;
one or more in-crash restraint systems (60) for the occupant;
**characterised by**
a data processing system (10) configured
to receive the information captured by the cabin monitoring system (20),
to receive the information captured by the one or more sensors (31), and configured to
perform a correlation of the information captured by the cabin monitoring system (20) with the information captured by the one or more sensors (31) to determine whether the position and / or movement of the occupant is due to a voluntary or involuntary movement of the occupant, and to
activate the one or more pre-crash restraint systems (40) for the occupant if the correlation indicates an involuntary movement of the occupant.

9. Vehicle (100) according to claim 8, wherein the one or more sensors (31) include an inertial sensor.

10. Vehicle (100) according to claim 8 or 9, wherein the cabin monitoring system (20) includes at least one 3D sensor system (21).

11. Vehicle (100) according to one of the claims 8 to 10, wherein the one or more pre-crash restraint systems (40) include an electric safety belt retractor.

12. Vehicle (100) according to one of the claims 8 to 11, wherein the vehicle (100) includes a warning signal system (50), and the data processing system (10) is configured to activate the warning signal system (50) if the correlation indicates that the movement of the occupant is voluntary.

13. Vehicle (100) according to claim 12, wherein the data processing system (10) is configured to activate the warning signal system (50) only if the movement of the occupant exceeds a predefined threshold.

14. Vehicle (100) according to one of the claims 8 to 13, wherein the data processing system (10) is further configured to adapt a strategy for triggering the one or more in-crash restraint systems (60) based on the information on the position and/or movement of the occupant.

## Patentansprüche

1. Verfahren zur Insassenrückhaltesteuerung an Bord eines Fahrzeugs (100), wobei das Verfahren die Schritte umfasst:
Erfassen von Informationen über eine Position und/oder Bewegung des Insassen relativ zu einer Kabine des Fahrzeugs (100) mittels eines Kabinenüberwachungssystems (20) an Bord des Fahrzeugs (100);
Erfassen einer Information über einen Bewegungszustand des Fahrzeugs (100) mittels eines oder mehrerer Sensoren (31) an Bord des Fahrzeugs (100);
Korrelieren der Information über die Position und/oder die Bewegung des Insassen relativ zur Kabine mit der Information über den Bewegungszustand des Fahrzeugs (100), um zu bestimmen, ob die Position und/oder die Bewegung des Insassen auf eine freiwillige oder unfreiwillige Bewegung des Insassen zurückzuführen ist;
Aktivieren eines oder mehrerer Pre-Crash-Rückhaltesysteme (40) für den Insassen, falls die Korrelation des vorhergehenden Schritts eine unfreiwillige Bewegung des Insassen anzeigt.

2. Verfahren nach Anspruch 1, wobei ein Warnsignal ausgelöst wird, falls die Korrelation auf eine freiwillige Bewegung des Insassen hinweist.

3. Verfahren nach Anspruch 2, wobei das Warnsignal nur ausgelöst wird, wenn die Bewegung des Insassen einen vordefinierten Schwellenwert überschreitet.

4. Verfahren nach einem der vorhergehenden Ansprüche, wobei auf Basis der Information über die Position und/oder Bewegung des Insassen eine Strategie zur Auslösung eines oder mehrerer In-Crash-Rückhaltesysteme (60) adaptiert wird.

5. Verfahren nach einem der vorhergehenden Ansprüche, wobei der eine oder die mehreren Sensoren (31) an Bord des Fahrzeugs (100) zur Erfassung von Informationen über den Bewegungszustand des Fahrzeugs einen Trägheitssensor umfassen.

6. Verfahren nach einem der vorhergehenden Ansprüche, wobei das eine oder die mehreren Pre-Crash-Rückhaltesysteme (40) einen elektrischen Sicherheitsgurt-Retraktor umfassen.

7. Verfahren nach einem der vorhergehenden Ansprüche, wobei das Kabinenüberwachungssystem (20) mindestens ein 3D-Sensorsystem (21) umfasst.

8. Fahrzeug (100) umfassend
ein Kabinenüberwachungssystem (20), das so konfiguriert ist, dass es Informationen über eine Position und/oder Bewegung eines Insassen einer Kabine des Fahrzeugs (100) erfasst;
einen oder mehrere Sensoren (31), die so konfiguriert sind, dass sie Informationen über einen Bewegungszustand des Fahrzeugs (100) erfassen;
ein oder mehrere Pre-Crash-Rückhaltesysteme (40) für den Insassen;
ein oder mehrere In-Crash-Rückhaltesysteme (60) für den Insassen;
**gekennzeichnet durch**
ein Datenverarbeitungssystem (10), konfiguriert
um die vom Kabinenüberwachungssystem (20) erfassten Informationen zu empfangen,
um die von dem einen oder den mehreren Sensoren (31) erfassten Informationen zu empfangen, und konfiguriert, um
eine Korrelation der von dem Kabinenüberwachungssystem (20) erfassten Informationen mit den von dem einen oder den mehreren Sensoren (31) erfassten Informationen durchzuführen, um zu bestimmen, ob die Position und/oder die Bewegung des Insassen auf eine freiwillige oder unfreiwillige Bewegung des Insassen zurückzuführen ist, und um
das eine oder die mehreren Pre-Crash-Rückhaltesysteme (40) für den Insassen zu aktivieren, wenn die Korrelation eine unfreiwillige Bewegung des Insassen anzeigt.

9. Fahrzeug (100) nach Anspruch 8, wobei der eine oder die mehreren Sensoren (31) einen Trägheitssensor umfassen.

10. Fahrzeug (100) nach Anspruch 8 oder 9, wobei das Kabinenüberwachungssystem (20) mindestens ein 3D-Sensorsystem (21) umfasst.

11. Fahrzeug (100) nach einem der Ansprüche 8 bis 10, wobei das eine oder die mehreren Pre-Crash-Rückhaltesysteme (40) einen elektrischen Sicherheitsgurt-Retraktor umfassen.

12. Fahrzeug (100) nach einem der Ansprüche 8 bis 11, wobei das Fahrzeug (100) eine Warnsignalanlage (50) aufweist, und das Datenverarbeitungssystem (10) so konfiguriert ist, dass es die Warnsignalanlage (50) aktiviert, wenn die Korrelation anzeigt, dass die Bewegung des Insassen freiwillig ist.

13. Fahrzeug (100) nach Anspruch 12, wobei das Datenverarbeitungssystem (10) so konfiguriert ist, dass es das Warnsignalsystem (50) nur aktiviert, wenn die Bewegung des Insassen einen vordefinierten Schwellenwert überschreitet.

14. Fahrzeug (100) nach einem der Ansprüche 8 bis 13, wobei das Datenverarbeitungssystem (10) ferner so konfiguriert ist, dass es eine Strategie zur Auslösung des einen oder der mehreren In-Crash-Rückhaltesysteme (60) auf Basis der Informationen über die Position und/oder Bewegung des Insassen adaptiert.

## Revendications

1. Procédé de commande de retenu d'occupant à bord d'un véhicule (100), comprenant les étapes suivantes :
saisir d'informations sur la position et/ou le mouvement de l'occupant par rapport à une cabine du véhicule (100) au moyen d'un système de surveillance de la cabine (20) à bord du véhicule (100) ;
saisir, au moyen d'un ou plusieurs capteurs (31) à bord du véhicule (100), des informations sur l'état de mouvement du véhicule (100) ;
corréler les informations sur la position et/ou le mouvement de l'occupant par rapport à la cabine avec les informations sur l'état de mouvement du véhicule (100) afin de déterminer si la position et/ou le mouvement de l'occupant est dû à un mouvement volontaire ou involontaire de l'occupant ;
activer un ou plusieurs systèmes de retenue précollision (40) pour l'occupant si la corrélation de l'étape précédente indique un mouvement involontaire de l'occupant.

2. Procédé selon la revendication 1, dans lequel, si la corrélation indique un mouvement volontaire de l'occupant, un signal d'avertissement est déclenché.

3. Procédé selon la revendication 2, dans lequel le signal d'avertissement n'est déclenché que si le mouvement de l'occupant dépasse un seuil prédéfini.

4. Procédé selon l'une des revendications précédentes, dans lequel une stratégie de déclenchement d'un ou de plusieurs systèmes de retenue en cas d'accident (60) est adaptée en fonction des informations sur la position et/ou le mouvement de l'occupant.

5. Procédé selon l'une des revendications précédentes, dans lequel l'un ou les plusieurs capteurs (31) embarqués sur le véhicule (100) pour capter des informations sur l'état de mouvement du véhicule comprennent un capteur inertiel.

6. Procédé selon l'une des revendications précédentes, dans lequel l'un ou les plusieurs systèmes de retenue précollision (40) comprennent un enrouleur électrique de ceinture de sécurité.

7. Procédé selon l'une des revendications précédentes, dans lequel le système de surveillance de la cabine (20) comprend au moins un système de capteurs 3D (21).

8. Véhicule (100) comprenant
un système de surveillance de la cabine (20) configuré pour saisir des informations sur la position et/ou le mouvement d'un occupant de la cabine du véhicule (100) ;
un ou plusieurs capteurs (31) configurés pour saisir des informations sur l'état de mouvement du véhicule (100) ;
un ou plusieurs systèmes de retenue précollision (40) pour l'occupant ;
un ou plusieurs systèmes de retenue en cas d'accident (60) pour l'occupant;
**caractérisé par**
un système de traitement des données (10) configuré
pour recevoir les informations saisies par le système de surveillance de la cabine (20),
recevoir les informations capturées par l'un ou les plusieurs capteurs (31), et configuré pour
effectuer une corrélation entre les informations saisies par le système de surveillance de la cabine (20) et les informations saisies par l'un ou les plusieurs capteurs (31) afin de déterminer si la position et/ou le mouvement de l'occupant est dû à un mouvement volontaire ou involontaire de l'occupant, et de
activer l'un ou les plusieurs systèmes de retenue précollision (40) pour l'occupant si la corrélation indique un mouvement involontaire de l'occupant.

9. Véhicule (100) selon la revendication 8, dans lequel l'un ou les plusieurs capteurs (31) comprennent un capteur inertiel.

10. Véhicule (100) selon la revendication 8 ou 9, dans lequel le système de surveillance de la cabine (20) comprend au moins un système de capteurs 3D (21).

11. Véhicule (100) selon l'une des revendications 8 à 10, dans lequel l'un ou les plusieurs systèmes de retenue précollision (40) comprennent un enrouleur électrique de ceinture de sécurité.

12. Véhicule (100) selon l'une des revendications 8 à 11, dans lequel le véhicule (100) comprend un système de signal d'avertissement (50), et le système de traitement des données (10) est configuré pour activer le système de signal d'avertissement (50) si la corrélation indique que le mouvement de l'occupant est volontaire.

13. Véhicule (100) selon la revendication 12, dans lequel le système de traitement des données (10) est configuré pour activer le système de signal d'avertissement (50) uniquement si le mouvement de l'occupant dépasse un seuil prédéfini.

14. Véhicule (100) selon l'une des revendications 8 à 13, dans lequel le système de traitement des données (10) est en outre configuré pour adapter une stratégie de déclenchement de l'un ou des plusieurs systèmes de retenue en cas d'accident (60) sur la base des informations sur la position et/ou sur le mouvement de l'occupant.
